# EUROPEAN PATENT APPLICATION

(11) **EP 2 730 472 A2**
(43) Date of publication of application: **14.05.2014**
(21) Application number: 13189032.9
(22) Date of filing: 17.10.2013
(51) Int. Cl.: B60S 1/38, B60S 1/40

(54) **Clip member for assembling various mounting types of wiper arms**

(30) Priority: 07.11.2012 KR 20120125708
(71) Applicant: HS Technology Co., Ltd., Incheon 405-819 (KR); Dongyang Mechatronics Corp., Namdong-gu Incheon-city 405-846 (KR)
(72) Inventor: Lee, Jeong Goo, 139-846 Seoul (KR)
(74) Representative: Jordan, Volker Otto Wilhelm

(57) **Abstract**

A clip member (40) for mounting various mounting types of wiper arms including: a main body (420); a combination groove unit (422) that is combined with a pivot axis (33) provided on a lever member (30); a first mounting unit (424) that is formed on the main body (420) and has a curved surface so that the clip member (40) is combined with a U-hook type wiper arm (100); a second mounting unit (430) that is formed on a pair of sidewalls extending to a front side of the main body (420) and has a hole shape passing through the main body (40) in a width direction of the lever member (30); and a third mounting unit (442) that protrudes downwards from a ceiling of a cover (440) and elastically surrounds and holds a pin arm type wiper arm (200).

## Description

### CROSS-REFERENCE TO RELATED PATENT APPLICATION

This application claims the benefit of Korean Patent Application No. 10-2012-0125708, filed on November 7, 2012, in the Korean Intellectual Property Office, the disclosure of which is incorporated herein in its entirety by reference.

### BACKGROUND OF THE INVENTION

### 1. Field of the Invention

The present invention relates to a clip member for a wiper blade device of a vehicle, and more particularly, to a clip member for assembling various mounting types of wiper arms.

### 2. Description of the Related Art

A blade assembly for cleaning a windshield (the front window) of a vehicle is a convenience and active safety device installed to ensure the visibility of a driver by removing foreign materials or rain from the front window.

Generally, the blade assembly for cleaning the front window of a vehicle includes a wiper strip that has elasticity to slidingly contact the front window, a supporting member for elastically supporting the wiper strip, and a retainer connector as connection assembly for solidly fixing the wiper strip on a wiper arm. Generally, a contact error is formed between the wiper strip and the front window due to a curvature difference between the wiper strip and the front window. Thus, in order to compensate for the contact error, the retainer has a tournament structure.

Recently, to improve the performance of vehicles, various types of high speed wiper blade devices have been developed. An example of such a wiper blade device has been disclosed in Korean Patent Publication No. 2012-0038900.

Generally, a wiper blade device and a wiper arm are combined by using a clip member installed at a central region of the wiper blade device. An example of such a clip member has been disclosed in Korean Utility Model Registration No. 0334423.

However, there are several types of wiper arms according to the types of vehicles such as wiper arms of a U-hook type, a pin arm type, and a slide arm type according to a mounting part combined with the wiper blade. The wiper blade that is combined with the wiper arm uses an exclusive clip member appropriate for the type of a vehicle. However, when the wiper blade device is worn out after the vehicle is used for a certain period of time, the driver may replace the wiper blade device with a new wiper blade device according to his/her taste. In this case, although the driver wants to mount a wiper blade of a new type on the wiper blade device according to his/her taste, the wiper blade may not be mounted due to a different mounting structure between the wiper arm of the driver's vehicle and the new wiper blade.

Accordingly, there is a need to develop a clip member that can be widely used for mounting various types of wiper arms regardless of the types of vehicles.

### SUMMARY OF THE INVENTION

The present invention provides a clip member that has an improved structure so that various mounting types of wiper arms may be mounted on a wiper blade device according to a driver's taste, regardless of the mounting type of the wiper blade device.

According to an aspect of the present invention, there is provided a clip member for mounting various mounting types of wiper arms, the clip member being rotatably mounted at a center of a wiper blade device in a length direction therof, the clip member including: a main body; a combination groove unit that is attachably and detachably combined with a pivot axis provided on a lever member so that the combination groove unit is rotatably accommodated in a clip accommodation hole that is formed in the lever member in the wiper blade device; a first mounting unit that is formed on the main body and has a curved surface so that the clip member is combined with a U-hook type wiper arm; a second mounting unit that is formed on a pair of sidewalls extending to a front side of the main body and has a hole shape passing through the main body in a width direction of the lever member; and a third mounting unit that protrudes downwards from a ceiling of a cover that is rotatably combined with respect to a front unit of the main body and elastically surrounds and holds a pin arm type wiper arm that passes through the second mounting unit.

The clip member may further include stopping protrusions that protrude outwards in a width direction of the main body at edge units of a pair of legs that protrude downwards from the ceiling of the cover, and are stopped by popping grooves formed on lower sidewalls of the main body on which the second mounting unit is formed to prevent an unexpected rotation of the cover in an opening direction thereof.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic perspective view of a clip member according to an embodiment of the present invention;
FIG. 2 is a schematic perspective view of a wiper blade device having the clip member of FIG. 1;
FIG. 3 is a schematic exploded perspective view of a lever member and a clip member that constitute the wiper blade device of FIG. 2;
FIG. 4 is a cross-sectional view of the lever member taken along the line IV-IV of FIG. 3;
FIG. 5 is a schematic perspective view of a structure of a U-hook type wiper arm;
FIG. 6 is a schematic perspective view of the U-hook type wiper arm of FIG. 5 combined with a clip member;
FIG. 7 is a schematic perspective view of a structure of a pin arm type wiper arm; and
FIG. 8 is a schematic perspective view of the pin arm type wiper arm of FIG. 7 combined with a clip member.

### DETAILED DESCRIPTION OF THE INVENTION

Hereafter, the present invention will be described more fully with reference to the accompanying drawings, in which exemplary embodiments of the present invention are shown.

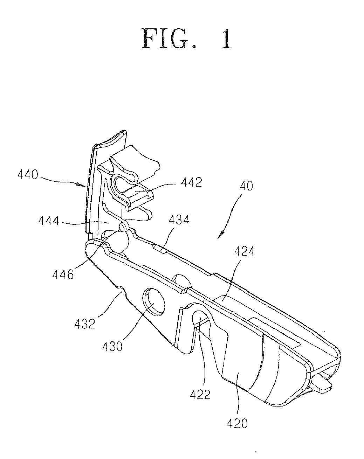

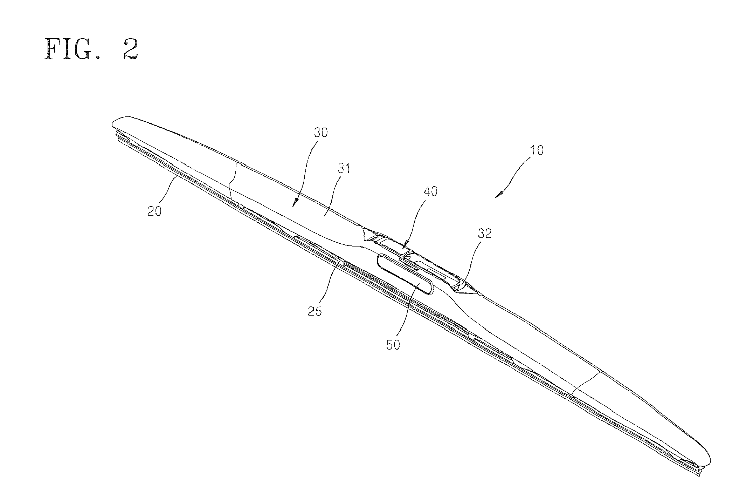

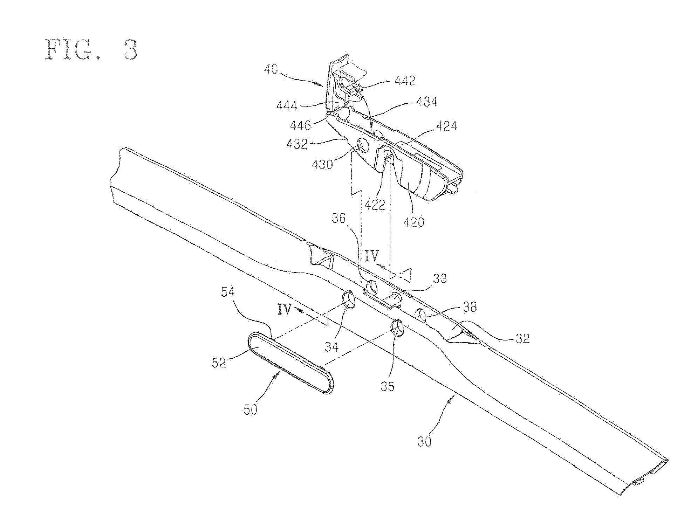

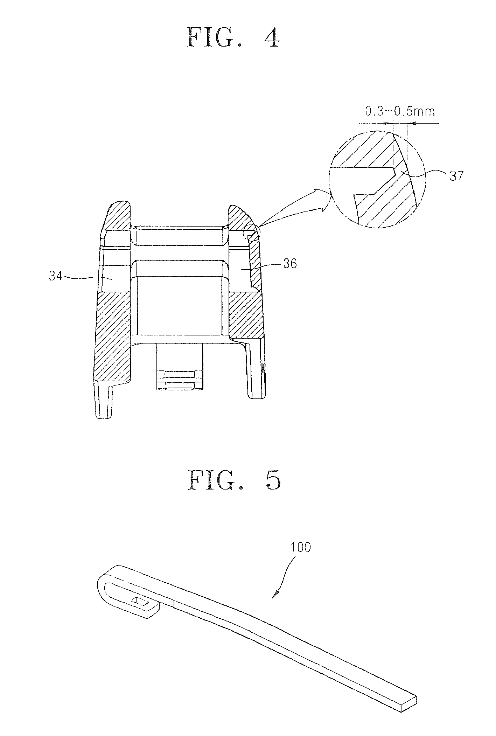

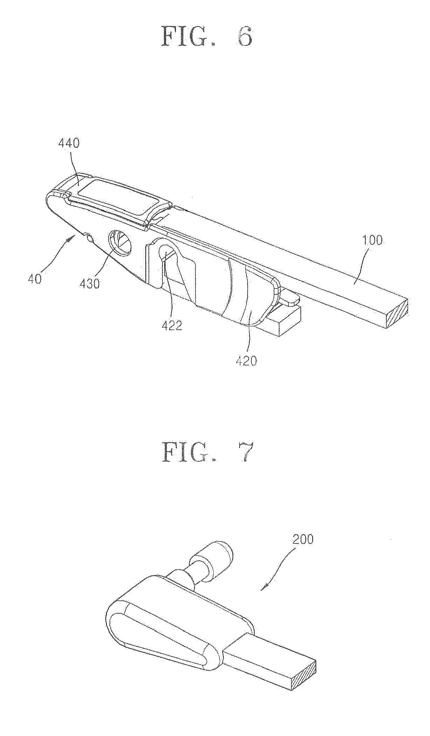

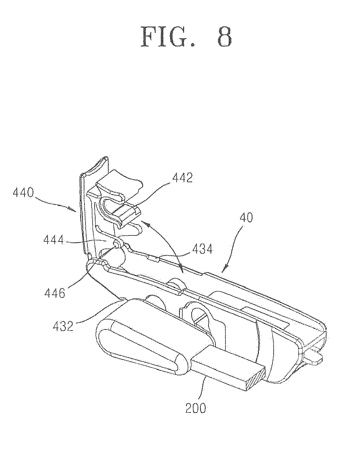

FIG. 1 is a schematic perspective view of a clip member 40 according to an embodiment of the present invention. FIG. 2 is a schematic perspective view of a wiper blade device 10 having the clip member 40 of FIG. 1. FIG. 3 is a schematic exploded perspective view of a lever member 30 and the clip member 40 that constitute the wiper blade device 10 of FIG. 2. FIG. 4 is a cross-sectional view of the lever member 30 taken along the line IV-IV of FIG. 3. FIG. 5 is a schematic perspective view of a structure of a U-hook type wiper arm 100. FIG. 6 is a schematic perspective view of the U-hook type wiper arm 100 of FIG. 5 combined with a clip member 40. FIG. 7 is a schematic perspective view of a structure of a pin arm type wiper arm 200. FIG. 8 is a schematic perspective view of the pin arm type wiper arm 200 of FIG. 7 combined with the clip member 40.

Referring to FIGS. 1 through 8, the clip member 40 may be used for assembling various mounting type wiper arms. According to the current embodiment, the clip member 40 may be a part mounted on a wiper blade device mounted on a windshield to remove foreign materials from a surface of the windshield.

Prior to describing the structure of the clip member 40, the structure of the wiper blade device 10 which accommodates the clip member 40 will now be briefly described.

As depicted in FIG. 2, the wiper blade device 10 includes a wiper lip 20, a yoke 25, a lever member 30, and the clip member 40.

The wiper lip 20 is a member that slidingly contacts a surface of a windshield of a vehicle. The wiper lip 20 may be formed of an elastic rubber material. The wiper lip 20 removes foreign materials from the surface of the windshield. Although not specifically shown in the drawing, a supporting member (a vertebra) having an elastic restoration force makes a shape of the wiper lip 20 remain constant.

The yoke 25 is a structure that connects the wiper lip 20 and the lever member 30 which will be described below. The yoke 25 supports an upper part of the wiper lip 20 and connects the lever member 30 like a bridge.

The lever member 30 includes a spoiler 31 that supports the wiper lip 20 and prevents the wiper lip 20 from rising from a windshield due to wind pressure that applied to the wiper lip 20 when the vehicle is driven. A plurality of the lever members 30 may be used. The lever member 30 may be formed of a synthetic resin material. In the current embodiment, the lever member 30 installed at the center of the wiper blade device 10 in the length direction thereof performs a key role. Thus, the lever member 30 installed at the center of the wiper blade device 10 will be described.

The lever member 30 includes a clip accommodation hole 32 at the wiper blade device 10 in the length direction thereof. The clip accommodation hole 32 accommodates the clip member 40. A pivot axis 33 that is disposed to cross both walls of the clip accommodation hole 32 in a width direction of the lever member 30 is provided in the clip accommodation hole 32. The pivot axis 33 may be formed as one body with the lever member 30, or may be combined with the lever member 30 after being separately formed. The clip accommodation hole 32 passes through upper and lower surfaces of the lever member 30. A horizontal cross-section of the clip accommodation hole 32 may have a rectangular shape.

The lever member 30 includes a first mounting hole 34 and a first popping groove 36.

The first mounting hole 34 is provided at a position separated from the center of the clip accommodation hole 32 in a length direction of the lever member 30. The first mounting hole 34 passes through a first sidewall of the clip accommodation hole 32. More specifically, the first mounting hole 34 is disposed to pass through a sidewall of the both sidewalls of the clip accommodation hole 32 in a length direction of the pivot axis 33. The first mounting hole 34 is formed in order to mount a pin arm type wiper arm or a slide arm type wiper arm.

The first popping groove 36 is formed along the same axis of the center line of the first mounting hole 34. As depicted in FIG. 4, the first popping groove 36 is formed in an inner side of a second sidewall of the clip accommodation hole 32 in which the first mounting hole 34 is formed. The first popping groove 36 includes a neck unit 37. The neck unit 37 constitutes an inner wall of the first popping groove 36 and is connected to the second sidewall of the clip accommodation hole 32 in which the first mounting hole 34 is formed. The neck unit 37 may have a thickness t in a range from about 0.3 mm to about 1 mm. The neck unit 37 is provided so that the inner wall of the first popping groove 36 is separated from the lever member 30 by a distance corresponding to a force that can be applied by an adult woman by finger.

The first popping groove 36 and the first mounting hole 34 are configured to face each other when the inner wall of the first popping groove 36 is separated from the lever member 30 by a force in a range from about 3 kgf to about 5 kgf that is applied in a width direction of the lever member 30. When a force that is applied to the inner wall of the first popping groove 36 is less than 3 kgf, that is, the force that is applied to the inner wall of the first popping groove 36 is weaker than a force that may be exerted by an adult woman by finger, the inner wall of the first popping groove 36 is not separated from the lever member 30. However, when a force that is applied to the inner wall of the first popping groove 36 is greater than 5 kgf, the force exceeds the range of force by which the inner wall of the first popping groove 36 is separated from the lever member 30, and thus, an unnecessary external force is applied.

A pin arm type wiper arm or a slide arm type wiper arm may be mounted on the lever member 30 through the first mounting hole 34 and the first popping groove 36. The pin arm type wiper arm or the slide arm type wiper arm may be combined with the lever member 30 in tandem with the clip member 40 that is accommodated between the first mounting hole 34 and the first popping groove 36.

The lever member 30 may include a second mounting hole 35 and a second popping groove 38 as constituent elements corresponding to the first mounting hole 34 and the first popping groove 36. If the first mounting hole 34 and the first popping groove 36 are used in the case of a left-hand drive (LHD) vehicle, the second mounting hole 35 and the second popping groove 38 may be used in the case of a right-hand drive (RHD) vehicle.

The second mounting hole 35 is symmetrically formed with respect to the first mounting hole 34 based on the center of the lever member 30 in the length direction thereof. The second mounting hole 35 has the same structure as the first mounting hole 34.

The second popping groove 38 is symmetrically formed with respect to the first popping groove 36 based on the center of the lever member 30 in the length direction thereof. The second popping groove 38 has the same structure as the first popping groove 36.

The first mounting hole 34, the first popping groove 36, the second mounting hole 35, and the second popping groove 38 are only used for mounting the pin arm type wiper arm 200 depicted in FIG. 7, and are not used for mounting the U-hook type wiper arm 100 depicted in FIG. 5. When the U-hook type wiper arm is mounted on the lever member 30, the first mounting hole 34 and the second mounting hole 35 are exposed to the outside. Accordingly, an appearance of the wiper blade device 10 may not be beautiful. In this case, a beauty cap 50 is provided to make the appearance of the wiper blade device 10 beautiful, and at the same time, to prevent the penetration of foreign materials into the lever member 30.

The beauty cap 50 includes a cover unit 52 and a set of protruded combining units 54.

The cover unit 52 has a plane type structure covering the first mounting hole 34 and the second mounting hole 35 so that the first mounting hole 34 and the second mounting hole 35 are not seen from the outside.

The protruded combining units 54 protrude from a rear surface of the cover unit 52. The protruded combining units 54 form a hook having an elastic restoration force. Accordingly, the protruded combining units 54 are elastically combined to the first mounting hole 34 and the second mounting hole 35. The protruded combining units 54 may have an elastic restoration force. The elastic restoration force may be an appropriate external force, for example, a force that is applied to the first mounting hole 34 by a human finger so that the protruded combining units 54 may be separated from the first mounting hole 34 and the second mounting hole 35.

The beauty cap 50 covers the first mounting hole 34 and the second mounting hole 35 when the first mounting hole 34 and the second mounting hole 35 are not used to make the appearance of the lever member 30 beautiful, and also, the beauty cap 50 prevents foreign materials from penetrating into the lever member 30. A trade mark or a logo may be displayed on a front surface of the cover unit 52. The beauty cap 50 may be attachably and detachably combined with the lever member 30.

The clip member 40 is combined on a central region of the lever member 30. That is, the clip member 40 is disposed at a center of the wiper blade device 10 in the length direction thereof. The clip member 40 is rotatably installed on the lever member 30 of the wiper blade device 10. The clip member 40 is formed to mount at least two types of wiper arms.

The clip member 40 includes a main body 420, a combination groove unit 422, a first mounting unit 424, a second mounting unit 430, and a third mounting unit 442.

The main body 420 is a basic frame of the clip member 40. The main body 420 may be formed of a synthetic resin material such as polypropylene (PP).

The combination groove unit 422 is attachably and detachably combined with a pivot axis 33 that is provided on the lever member 30. The combination groove unit 422 is combined with the pivot axis 33 to be able to slide on an outer circumference of the pivot axis 33. Accordingly, the clip member 40 is rotatably accommodated in the clip accommodation hole 32 that is provided in the lever member 30 in the wiper blade device 10.

The first mounting unit 424 is formed on an upper surface of the main body 420. The first mounting unit 424 includes a curved surface so that the first mounting unit 424 is combined with the U-hook type wiper arm 100 depicted in FIG. 5.

The second mounting unit 430 is formed on a pair of sidewalls extending a front side of the main body 420. The second mounting unit 430 is a hole that passes through the main body 420 in a width direction of the lever member 30. The second mounting unit 430 is a part of the clip member 40 with which the pin arm type wiper arm 200 is combined.

The third mounting unit 442 is provided on a cover 440 that is rotatably combined with respect to the pair of sidewalls extending the front side of the main body 420. The third mounting unit 442 protrudes downwards from a ceiling of the cover 440. As depicted in FIG. 8, the third mounting unit 442 elastically surrounds and holds the pin arm type wiper arm 200 that passes through the second mounting unit 430.

The cover 440 includes stopping protrusions 446. The stopping protrusions 446 prevent an unexpected rotation of the cover 440 in an opening direction of the cover 440. The stopping protrusions 446 are formed on edge units of a pair of legs 444 protruded downwards from the ceiling of the cover 440. The stopping protrusions 446 protrude outer sides of the main body 420 in a width direction of the main body 420. The stopping protrusions 446 prevent an unexpected opening of the cover 440 by stopping the cover 440 at stopper grooves 432 that are formed on lower sidewall edges of the main body 420 on which the second mounting unit 430 is formed. Meanwhile, the cover 440 is stopped by auxiliary protrusions 434 that inwardly protrude from the upper sidewalls of the main body 420 on which the second mounting unit 430 is formed, and thus, the auxiliary protrusions 434 prevent an unexpected opening of the cover 440 in tandem with the stopping protrusions 446.

Hereinafter, the effect of the clip member 40 having the above configuration will now be described in detail when the clip member 40 is combined with the U-hook type wiper arm 100 and is combined with the pin arm type wiper arm 200, respectively.

First, a process of combining the U-hook type wiper arm 100 with the clip member 40 will be described with reference to FIGS. 5 and 6.

As depicted in FIG. 5, an edge of the U-hook type wiper arm 100 has a U shape. A method of combining the U-hook type wiper arm 100 with the wiper blade device 10 is applied to most vehicles currently in the market. That is, in a state where the cover 440 of the clip member 40 is opened, the edge unit of the U-hook type wiper arm 100 is combined by surrounding the first mounting unit 424 of the clip member 40. In this process, protrusions having an elastic pin type are combined with the holes formed in the U-hook type wiper arm 100 at a lower edge of the first mounting unit 424, and thus, a movement of the U-hook type wiper arm 100 with respect to the wiper blade device 10 may be prevented. Also, when the cover 440 provided on the clip member 40 is closed, an edge of the cover 440 supports the curved surface of the U-hook type wiper arm 100, and thus, the movement of the U-hook type wiper arm 100 may also be prevented.

A process of combining of the pin arm type wiper arm 200 with the clip member 40 will be described with reference to FIGS. 7 and 8.

As depicted in FIG. 7, an edge of the pin arm type wiper arm 200 includes a pin unit protruded in a width direction of the clip member 40. The cover 440 of the clip member 40 is maintained in an opened state while the clip member 40 is accommodated in the clip accommodation hole 32. Afterwards, the pin unit of the pin arm type wiper arm 200 of FIG. 7 is inserted sequentially through the first mounting hole 34 of the lever member 30, the second mounting unit 430 of the clip member 40, and the first popping groove 36 of the lever member 30. Next, the cover 440 is closed so that the third mounting unit 442 formed on the cover 440 surrounds the pin unit of the pin arm type wiper arm 200. The assembling of the pin arm type wiper arm 200 with the clip member 40 is completed through the above process.

As described above, a clip member according to the current embodiment allows a wiper blade device to be readily mounted according to the driver's taste, regardless of the wiper arm type that is already mounted on the vehicle. Accordingly, the selection choice for a wiper blade device may be expanded, and thus, the driver's taste for using a specific wiper blade device may be satisfied. That is, the clip member that may be used for mounting various mounting types of wiper arms is configured to along mounting of at least two types of wiper blades, and thus, the clip member allows a driver to use a wiper blade device according to his (her) taste regardless of the type of vehicle.

While the present invention has been particularly shown and described with reference to exemplary embodiments thereof, it will be understood by those of ordinary skill in the art that various changes in form and details may be made therein without departing from the spirit and scope of the present invention as defined by the following claims.

A clip member for mounting various mounting types of wiper arms including: a main body; a combination groove unit that is combined with a pivot axis provided on a lever member; a first mounting unit that is formed on the main body and has a' curved surface so that the clip member is combined with a U-hook type wiper arm; a second mounting unit that is formed on a pair of sidewalls extending to a front side of the main body and has a hole shape passing through the main body in a width direction of the lever member; and a third mounting unit that protrudes downwards from a ceiling of a cover and elastically surrounds and holds a pin arm type wiper arm.

## Claims

1. A clip member for mounting various mounting types of wiper arms, the clip member being rotatably mounted at a center of a wiper blade device in a length direction thereof, the clip member comprising:
a main body;
a combination groove unit that is attachably and detachably combined with a pivot axis provided on a lever member so that the combination groove unit is rotatably accommodated in a clip accommodation hole that is formed in the lever member in the wiper blade device;
a first mounting unit that is formed on the main body and has a curved surface so that the clip member is combined with a U-hook type wiper arm;
a second mounting unit that is formed on a pair of sidewalls extending to a front side of the main body and has a hole shape passing through the main body in a width direction of the lever member; and
a third mounting unit that protrudes downwards from a ceiling of a cover that is rotatably combined with respect to a front unit of the main body and elastically surrounds and holds a pin arm type wiper arm that passes through the second mounting unit.

2. The clip member of claim 1, further comprising stopping protrusions that protrude outwards in a width direction of the main body at edge units of a pair of legs that protrude downwards from the ceiling of the cover, and are stopped by popping grooves formed on lower sidewalls of the main body on which the second mounting unit is formed to prevent an unexpected rotation of the cover in an opening direction thereof.
